Europäisches Patentamt

European Patent Office

Office européen des brevets

(11) Veröffentlichungsnummer: **0 492 278 A1**

# EUROPÄISCHE PATENTANMELDUNG

(21) Anmeldenummer: **91121230.6**

(22) Anmeldetag: **11.12.91**

(51) Int. Cl.5: **A23K 1/14**, A23L 1/211

(30) Priorität: **20.12.90 DE 4040920**

(43) Veröffentlichungstag der Anmeldung:
**01.07.92 Patentblatt 92/27**

(84) Benannte Vertragsstaaten:
**BE DE FR GB NL**

(71) Anmelder: **KRUPP MASCHINENTECHNIK GESELLSCHAFT MIT BESCHRÄNKTER HAFTUNG**
**Helenenstrasse 149**
**W-4300 Essen 1(DE)**

(72) Erfinder: **Zmudzinski, Roman, Dipl.-Ing.**
**Kielstück 22**
**W-2000 Hamburg 62(DE)**

(54) **Saatenentgiftung.**

(57) Körnige, ölhaltige Saaten oder Saatprodukte werden zur Entgiftung und Entbitterung nach mechanischer Konditionierung in einen Autoklaven eingebracht, dort behandelt und anschließend in einen Behandlungsraum mit atmosphärischen Bedingungen ausgetragen sowie danach getrocknet und gekühlt. Die bei der bisherigen Behandlung im Behandlungsgut verbleibenden toxischen Stoffe lassen eine Beimischung in Fertigfutter für die Tierfütterung nur zu einem sehr geringen Anteil zu. Um den Gehalt an toxischen Stoffen derart herabzusetzen, daß aus toxikologischer Sicht ein Zusatz in unbegrenzter Menge zu beliebigem Tierfutter möglich ist, sollen bei der Behandlung im Autoklaven bestimmte Parameterkombinationen eingehalten werden, die sich durch festgelegte Bereiche für Temperatur, Druck, Gutfeuchtigkeit, Destillationsdampfzusatz und Behandlungszeit auszeichnen. Dabei wird das Behandlungsgut über eine druckdichte Schleuse einer mehretagigen Behandlungseinrichtung mit beheizbaren Böden und Mänteln zugeführt, dort durch Rührwerksarme bewegt, durchmischt und fortlaufend in Kontakt mit durch die Rührwerksarme ausströmendem Dampf gebracht, dessen nicht im Behandlungsgut kondensierender Teil sich mit den zu entfernenden toxischen Stoffen belädt.

EP 0 492 278 A1

Die Erfindung bezieht sich auf ein Verfahren zur kontinuierlichen, hydrothermischen Behandlung von körnigen, ölhaltigen Saaten oder Saatprodukten, insbesondere Entgiftung und Entbitterung von Raps, bei dem das ggf. mechanisch konditionierte Behandlungsgut in einen Autoklaven eingebracht, dort behandelt und anschließend in einen Behandlungsraum mit atmosphärischen Bedingungen ausgetragen sowie danach getrocknet und gekühlt wird.

Nach bekannten Behandlungsverfahren erzeugte Produkte aus der Ölsaaten- insbesondere Rapsverarbeitung wie z.B. behandelter oder nicht behandelter Vollfettraps, konditionierter und mechanisch gepreßter Rapspreßkuchen und aus diesem etwa durch Lösungsmittelextraktion erzeugter Rapsextraktionsschrot beinhalten zu hohe Anteile an toxischen Stoffen, nämlich Glycosinolate (GLS) und aus diesen entstehende Isothiocyanate (ITC) und 5-Vinyloxazolidin-2-thione (VOT), um in größerem Umfang als Beimischung in Fertigfutter für die Tierfütterung Anwendung zu finden. Die maximalen Beimischungsmengen liegen je nach Futtermaterial und Tierart zwischen 3 und allenfalls 30 %. Damit sind der Verwendung von Rapsprodukten für die Tierfütterung sehr enge Grenzen gesetzt.

Bei einer Behandlung nach der oben angegebenen Verfahrensführung, wie sie bereits vorgeschlagen wurde, sind ohne weiteres etwa gleiche Ergebnisse erreichbar, wenn auch bereits der Aufschluß einer Vielzahl von Rohstoffen wirtschaftlich günstig gestaltet werden kann. Es ist Aufgabe der vorliegenden Erfindung, für eine derartige Verfahrensführung Betriebsbedingungen anzugeben, die zu einer wesentlichen Herabsetzung des Anteils an toxischen Stoffen im Behandlungsgut führen. Danach wird vorgeschlagen, bei einem Verfahren der eingangs genannten Art die Behandlung im Autoklaven unter einer der drei folgenden Parameterkombinationen vorzunehmen:

a)

| Temperatur | 125 bis 130°C |
| Druck | 2,5 bis 2,8 bar |
| Gutfeuchtigkeit | 14 bis 15 % bezogen auf das Gewicht |
| Destillationsdampfzusatz | etwa 3 % bezogen auf das Gutdurchsatzgewicht |
| Behandlungszeit | 15 bis 60 min |

b)

| Temperatur | 135 bis 138°C |
| Druck | 3,2 bis 3,8 bar |
| Gutfeuchtigkeit | 12 bis 13 % bezogen auf das Gewicht |
| Destillationsdampfzusatz | etwa 5 % bezogen auf das Gutdurchsatzgewicht |
| Behandlungszeit | 5 bis 30 min |

c)

| Temperatur | 140 bis 145°C |
| Druck | 4,2 bis 4,5 bar |
| Gutfeuchtigkeit | 10 bis 11 % bezogen auf das Gewicht |
| Destillationsdampfzusatz | etwa 7 % bezogen auf das Gutdurchsatzgewicht |
| Behandlungszeit | 5 bis 10 min. |

Es hat sich gezeigt, daß bei einer solchen Verfahrensführung ein derart niedriger Gehalt an toxischen Stoffen GLS, ITC und VOT in der Ausbeute verbleibt, daß sie in aus toxikologischer Sicht unbegrenzter Menge beliebigem Tierfutter zugesetzt werden kann.

Z.B. beinhalten nach der Behandlung von

Vollfettraps - ganze Körner, 40% Fettgehalt

Rapspreßkuchen - 7-18 % Fettgehalt

Rapsextraktionsschrot - 1-2 % Fettgehalt

die Behandlungsprodukte Gehalte von

| ITC | 300 ppm |
| VOT | 600 ppm |
| intakte GLS | 3 micromol/g, |

wenn Raps und Rapsprodukte der Sorte "00" mit maximal 35 micromol/g GLS eingesetzt werden, und von

EP 0 492 278 A1

| ITC | 500 ppm |
| VOT | 900 ppm |
| intakte GLS | 8 micromol/g, |

wenn Rapssorten mit einem GLS-Gehalt ≥ 65 micromol/g in der Rohsaat eingesetzt werden.

Diese Ergebnisse wurden in der Reihenfolge der drei vorstehend aufgeführten Einsatzmaterialien bei Behandlungszeiten von 60, 40 und 15 Minuten erreicht. Das erfindungsgemäße Verfahren erfordert bei großtechnischer Anwendung sehr geringen Investitionsaufwand sowie niedrigen Betriebsmittel-, inbesondere Dampfverbrauch und gewährleistet wegen des kontinuierlichen Betriebs gleichbleibende Qualität des Endproduktes und außerdem eine minimale Schädigung der im Endprodukt vorhandenen erwünschten Wirkstoffe.

Der im Autoklaven stattfindende Verfahrensschritt erfolgt zweckmäßig in der Weise, daß das Behandlungsgut über eine druckdichte Schleuse einer mehretagigen Behandlungseinrichtung mit beheizbaren Böden und Mänteln zugeführt, dort durch Rührwerksarme eines zentralen Rührwerkes bewegt, durchmischt und fortlaufend in Kontakt mit durch Öffnungen in den Rührwerksarmen ausströmendem Dampf gebracht und nach Durchlaufen der Etagen über eine weitere Druckschleuse ausgetragen wird, wobei sich ein nicht im Behandlungsgut kondensierender Teil des Dampfes mit den zu entfernenden toxischen Stoffen belädt und nach außen zur Kondensation abgeführt wird sowie der Feuchtigkeitsgehalt im Behandlungsgut durch Kondensation eines Teils des zugeführten Dampfes, durch Einspritzen von Heißwasser in die einzelnen Etagen durch ein gesondertes Düsensystem und durch Regulierung der Beheizung der Böden und Mäntel der Etagen eingestellt wird.

Die Verweilzeit des Behandlungsgutes im Autoklaven wird durch die Schichthöhe auf den Behandlungsböden in Abhängigkeit von der Drehzahl bzw. dem Durchsatz der Druckschleusen geregelt. Nach dem Verlassen der Austragsdruckschleuse fällt das Behandlungsgut auf einen weiteren Boden, auf dem eine spontane Verdunstung der Feuchtigkeit aufgrund des sog. Flash-Effektes erfolgt. Über Rutschen oder eine weitere Schleuse gelangt es auf einen Trocknungs- bzw. Kühlungsboden, auf dem es auf die gewünschte Feuchte und Temperatur mittels durchströmender Luft warm oder kalt getrocknet und gekühlt wird. Die Kondensation des aus dem Autoklaven abgeführten, mit toxischen Stoffen beladenen Dampfes erfolgt in einem Mischkondensator.

**Patentansprüche**

1. Verfahren zur kontinuierlichen hydrothermischen Behandlung von körnigen, ölhaltigen Saaten oder Saatprodukten, insbesondere Entgiftung und Entbitterung von Raps, bei dem das ggf. mechanisch konditionierte Behandlungsgut in einen Autoklaven eingebracht, dort behandelt und anschließend in einen Behandlungsraum mit atmosphärischen Bedingungen ausgetragen sowie danach getrocknet und gekühlt wird, dadurch gekennzeichnet, daß die Behandlung im Autoklaven unter einer der drei folgenden Parameterkombinationen erfolgt

    a)

| Temperatur | 125 bis 130°C |
| Druck | 2,5 bis 2,8 bar |
| Gutfeuchtigkeit | 14 bis 15 % bezogen auf das Gewicht |
| Destillationsdampfzusatz | etwa 3 % bezogen auf das Gutdurchsatzgewicht |
| Behandlungszeit | 15 bis 60 min |

    b)

| Temperatur | 135 bis 138°C |
| Druck | 3,2 bis 3,8 bar |
| Gutfeuchtigkeit | 12 bis 13 % bezogen auf das Gewicht |
| Destillationsdampfzusatz | etwa 5 % bezogen auf das Gutdurchsatzgewicht |
| Behandlungszeit | 5 bis 30 min |

    c)

| Temperatur | 140 bis 145°C |
| Druck | 4,2 bis 4,5 bar |
| Gutfeuchtigkeit | 10 bis 11 % bezogen auf das Gewicht |
| Destillationsdampfzusatz | etwa 7 % bezogen auf das Gutdurchsatzgewicht |
| Behandlungszeit | 5 bis 10 min. |

2. Verfahren nach Anspruch 1, dadurch gekennzeichnet, daß die Behandlung im Autoklaven in der Weise erfolgt, daß das Behandlungsgut über eine druckdichte Schleuse einer mehretagigen Behandlungseinrichtung mit beheizbaren Böden und Mänteln zugeführt, dort durch Rührwerksarme eines zentralen Rührwerkes bewegt, durchmischt und fortlaufend in Kontakt mit durch Öffnungen in den Rührwerksarmen ausströmendem Dampf gebracht und nach Durchlaufen der Etagen über eine weitere Druckschleuse ausgetragen wird, wobei sich ein nicht im Behandlungsgut kondensierender Teil des Dampfes mit den zu entfernenden toxischen Stoffen belädt und nach außen zur Kondensation abgeführt wird sowie der Feuchtigkeitsgehalt im Behandlungsgut durch Kondensation eines Teils des zugeführten Dampfes, durch Einspritzen von Heißwasser in die einzelnen Etagen durch ein gesondertes Düsensystem und durch Regulierung der Beheizung der Böden und Mäntel der Etagen eingestellt wird.

Europäisches
Patentamt

# EUROPÄISCHER RECHERCHENBERICHT

Nummer der Anmeldung

EP 91 12 1230

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 326 621 (SCHUMACHER, HEINZ)<br>* Seite 4, Zeile 5 - Seite 5, Zeile 20;<br>Ansprüche 1,3,6,9-16; Abbildungen 1,2 *<br>--- | 1,2 | A23K1/14<br>A23L1/211 |
| A | EP-A-0 148 143 (SVENSKA LANTMÄNNENS RIKSFÖRBUND)<br>* Seite 5, Zeile 19 - Seite 6, Zeile 24;<br>Ansprüche 1-3; Abbildung; Beispiele 1,2 *<br>--- | 1,2 | |
| A | DE-A-2 313 224 (DAHLEN, JOSEF ET AL.)<br>* das ganze Dokument *<br>--- | 1 | |
| A | EP-A-0 212 391 (SCHUMACHER, HEINZ)<br>* Seite 29, Zeile 1 - Seite 30, Zeile 2;<br>Ansprüche; Abbildungen *<br>* Seite 31, Absatz 2 *<br>--- | 1,2 | |
| A | PATENT ABSTRACTS OF JAPAN<br>vol. 4, no. 85 (C-15)(567) 18. Juni 1980<br>& JP-A-55 050 861 ( NISSHIN SEIJU K.K. ) 14. April 1980<br>* Zusammenfassung *<br><br>----- | 1 | RECHERCHIERTE SACHGEBIETE (Int. Cl.5)<br><br>A23K<br>A23L |

Der vorliegende Recherchenbericht wurde für alle Patentansprüche erstellt

| Recherchenort | Abschlußdatum der Recherche | Prüfer |
|---|---|---|
| DEN HAAG | 04 FEBRUAR 1992 | DEKEIREL M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)